# EUROPEAN PATENT APPLICATION

(11) **EP 4 822 268 A1**
(43) Date of publication of application: **14.10.2026**
(21) Application number: 23958184.6
(22) Date of filing: 12.12.2023
(51) Int. Cl.: F24S 40/00, H02S 40/00

(54) **WATER-BALLASTED AIR DEFLECTOR FOR SOLAR STRUCTURES**

(30) Priority: 08.11.2023 ES 202331980 U
(71) Applicant: Landatu Solar S.L, 48001 Bilbao (Bizkaia) (ES)
(72) Inventor: MARTÍN BÁEZ, Cristian Javier, 48001 Bilbao (ES)
(74) Representative: Ezcurra Zufia, Maria Antonia
(86) International application number: PCT/ES2023/070740
(87) International publication number: WO 2025/099337

(57) **Abstract**

The present invention relates to a water-ballasted air deflector for solar structures, in particular photovoltaic solar structures.

The invention is characterised by the particular design and configuration of the deflector, which has a dual function: it acts as an air deflector to minimise wind loads on a photovoltaic panel or structure and is also configured to be filled with water in order to provide ballast for the solar structure.

## Description

### OBJECT OF THE INVENTION

As established in the title of the invention, the object of the present invention is a water-ballasted air deflector for solar structures, particularly solar photovoltaic structures.

The present invention is characterised by the special design and configuration of the deflector, which has a dual function: on the one hand, it serves as an air deflector to minimise wind loads on the panel or solar photovoltaic structure, and on the other hand, it can be filled with water to provide ballast for the solar structure.

The present invention therefore pertains to support structures for solar photovoltaic installations and in particular, to ballasted solar photovoltaic installations.

### BACKGROUND TO THE INVENTION

Solar photovoltaic systems can be installed on all kinds of surfaces, such as roofs, canopies, shelters, flat/terraced roofs and even on water surfaces.

In the case of flat walkable roofs, many of the installations are made using supports or structures of metal sections that pitch the panels at an angle, and this structure is usually bolted to the roof by means of some system, normally with drilled holes.

However, the main problem is that there are many roofs where it is either not permitted or not possible to drill or bore holes in the roof as this would damage the roofing membrane or coatings and could result in leakage or damp. It may also be made impossible by the fact that the roof is covered with something that prevents or hinders drilling or attachment, such as gravel, water, earth, etc.. In order for solar photovoltaic installations to be attached to this type of rooftop, the solution adopted to date has been to use ballast mounts, where weight is simply added so that the installation can withstand gusts of wind, thus avoiding the need to drill into the roof.

The solar panels are placed on these mounts and counterbalanced in some way, using concrete slabs or a similar element that provides weight.

Among the different solutions, the most common way to make the installation is to place concrete slabs or kerbstones on which the metal brackets that angle the solar panels are placed. There are also hybrid solutions, with sloping concrete mounts onto which the panels are fitted directly. The main problem with this type of solution lies in the difficulty of moving heavy concrete blocks about, which makes installation difficult and increases the time required to complete the work, in addition to the need for auxiliary equipment such as cranes. Another disadvantage is that these concrete blocks are very brittle and can break easily during transport or installation.

There are also other solutions, such as plastic supports that are ballasted with concrete slabs. There are other variants of this concept of a ballasted plastic support, such as that described in Patent WO2010/054795 A1 which relates to an L-shaped bracket that is ballasted with stones or similar.

However, among the most commonly used and most common ballasted solutions in the industry are those that consist of a metal structure (a metal frame) on which weight is placed either in trays or in some other form. An example is the support member described in patent ES2927554T3.

Additionally, in order to minimise wind loads (and therefore the need for ballast in the installation), air or wind deflectors are commonly placed on the rear areas of the panels, which significantly reduce the wind stresses and therefore the weight required to withstand gusts of wind. In this way, less weight is used and the roof is not overloaded, thus allowing for lighter installations in places where excess weight may be a limiting factor. In addition, the use of these air deflectors makes the installation process faster and more convenient, since it is not necessary to move heavy concrete blocks, thus avoiding the use of cranes or auxiliary equipment.

However, there are no known means in the state of the art of the sector that fulfil a dual function, serving on the one hand as wind deflectors for a photovoltaic solar installation, and on the other hand, simultaneously serving as ballast for the support structures of said installations. This is the object of the present application, the essential characteristics of which are set forth in the first claim.

### DESCRIPTION OF THE INVENTION

The object of the present invention is set forth in its essence in the independent claim, and the various embodiments are set forth in the dependent claims.

The present invention relates to a water-ballasted air deflector that can be fixed to a solar photovoltaic structure, where the deflector has a general rectangular configuration with a water tank that can be accessed by way of a filling nozzle and on which a cap is placed after filling and having at the ends a flat surface with oblong holes at each end through which fixing screws are passed to secure the deflector to a solar photovoltaic structure.

The deflector is made for preference of any plastic material (HDPE, PP, PVC) or other composite materials.

As a result of the aforesaid characteristics, the dual function noted is achieved; on the one hand, the invention serves as a means of directing the wind and reducing the stresses on the solar panels and, on the other, it serves as a means of ballast, since the deflector tanks are filled in situ by adding water or some other material through a hose, meaning that it is not necessary to lift the ballast weights to the roofs or decks, as it has been heretofore. This makes installation much simpler, quicker and cheaper.

Unless otherwise indicated, all technical and scientific elements used in this specification have the meaning habitually understood by a person skilled in the art to which this invention pertains. In the practice of the present invention, similar or equivalent procedures and materials to those described in the record can be used.

Throughout the description and the claims, the words 'contains' or 'comprises' and its variants are not intended to exclude other technical characteristics, additives, components or steps. For experts in the field, other objects, advantages and characteristics of the invention will emerge partly from the description and partly from practice with the invention.

### DESCRIPTION OF FIGURES

To complete the description made herein and in order better to aid understanding of the characteristics of the invention, in accordance with a preferential example of a practical embodiment thereof, this description is accompanied by a set of drawings showing as follows in indicative, but not restrictive terms.
Figure 1 shows a solar panel on a structure onto which two air deflectors such as that which is the object of the invention have been secured.
Figure 2 shows in detail the deflector that is the object of the invention with the filling nozzle at the top.
Figure 3 shows in detail a variant of the deflector that is the object of the invention in which the nozzle is located on the side.
Figure 4 shows several panels all of which have the water-ballasted air deflectors of the invention attached to them.
Figure 5 shows a detail of the attachment of one of the two ends of the deflector.

### PREFERRED EMBODIMENT OF THE INVENTION.

As per the figures, one preferred embodiment of the proposed invention is described below.

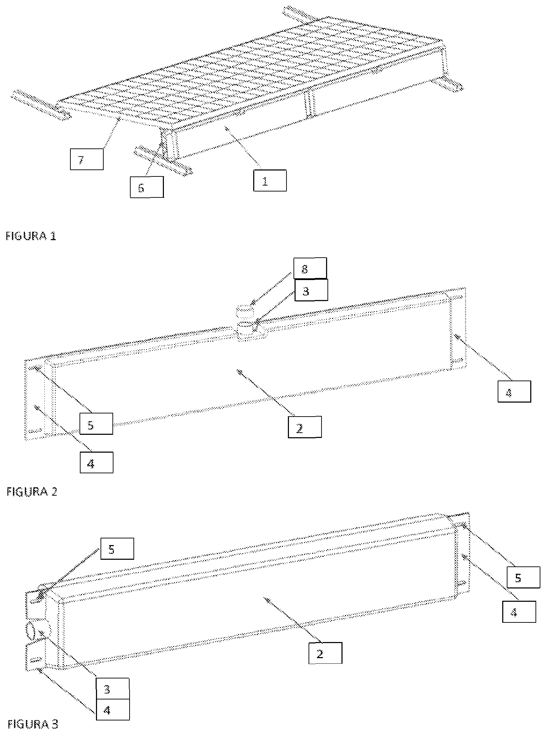

Figures 1 to 4 show a deflector (1) attached to a support structure (6) of a solar panel (7).

The air deflector (1) has a general rectangular configuration and in its central part there is a chamber (2) whose interior is accessible through a nozzle (3) and at the ends of the deflector (1) there are flat fins (4).

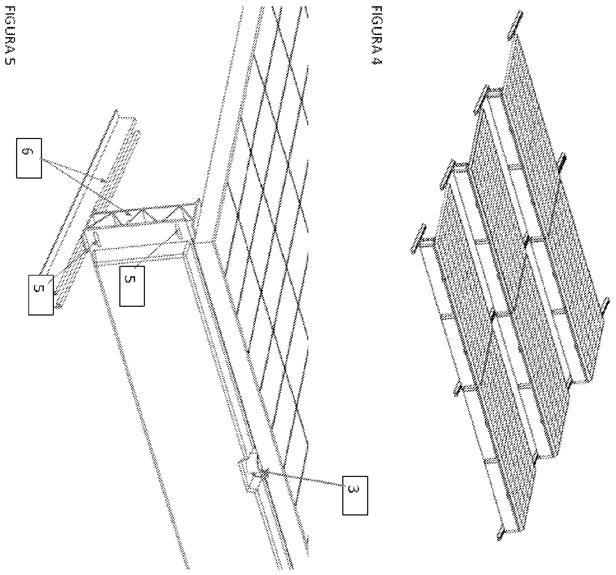

In said fins (4), as shown in Figure 4, there is a series of oblong or flat perforations (5), or one single one, through which bolts are passed, which may be screw-locks, self-tapping screws or self-drilling screws that allow the air deflector (1) to be attached to the solar panel support structure (6) (7).

The location of the nozzle (3) for filling the chamber (2) on which a cap (8) is placed can be on whichever side is considered convenient, thus in Figures 1, 2, 4 and 5, it is on the top of the deflector, while in Figure 3 it is on the side of the chamber (2).

Having sufficiently described the nature of the present invention, and the means of implementing it, it is noted that within the same essentiality, it may be made in other embodiments differing in detail from that indicated herein as an example, and to which the protection obtained shall equally extend, provided that it does not alter, change or modify its basic principle.

## Claims

1. Water-ballasted air deflector (1) for solar structures, **characterised in that** it has a general rectangular configuration and has a chamber (2) in its centre, accessible through a nozzle (3), and at the ends of the deflector (1) there are flat fins (4) for attachment to the structure by means of screws.

2. Water-ballasted air deflector (1) as per Claim 1, **characterised in that** the screws used are screw-locks, self-tapping screws or self-drilling screws.

3. Water-ballasted air deflector (1) as per Claim 1 or 2, **characterised in that** the chamber (2) is accessible through a filling nozzle (3).

4. Water-ballasted air deflector (1) as per Claim 3, **characterised in that** the nozzle (3) for filling the chamber (2) is located in the upper part of the chamber (2).

5. Water-ballasted air deflector (1) as per Claim 3, **characterised in that** the filling nozzle (3) is located on the side of the deflector.

6. Water-ballasted air deflector (1) as per any one of the preceding claims, **characterised in that** the flat fins (4) are provided with an oblong or coloured perforation (5) through which the fixing screws are passed.

7. Water-ballasted air deflector (1) as per claim 1 or 2, **characterised in that** the deflector is made of any plastic material (HDPE, PP, PVC) or other composite materials.
